# EUROPEAN PATENT APPLICATION

(11) **EP 1 781 015 A1**
(43) Date of publication of application: **02.05.2007**
(21) Application number: 05300886.8
(22) Date of filing: 31.10.2005
(51) Int. Cl.: H04N 3/15

(54) **Method for controlling an image sensor**

(71) Applicant: Thomson Licensing S.A., 92100 Boulogne-Billancourt (FR)
(72) Inventor: Centen, Petrus Gijsbertus Maria, 5051 BW, Goirle (NL); Roth, Sabine, 78087, Mönchweiler (DE); Rotte, Jeroen, 4835 GR, Breda (NL); Lehr, Steffen, 78050, Villingen-Schwenningen (DE)
(74) Representative: Rossmanith, Manfred

(57) **Abstract**

A method for addressing a CMOS image sensor includes simultaneously addressing multiple rows of pixels of the CMOS image sensor and applying the signals of pixels that are located in the same column to a shared column line. The signals of those pixels that are connected to the shared column line are averaged in a column capacitor. In one embodiment, the rows that are addressed simultaneously are consecutive to each other, and for producing a first, odd field of an interlaced image the blocks of rows that are simultaneously addressed are consecutive. For producing a second, even field of an interlaced image, which complements the first field, the blocks of rows that are simultaneously addressed are shifted with respect to those blocks, which were read out during the first field, but are still located consecutive to each other. In this way, all rows of the CMOS image sensor are used for both, the odd and the even field.

## Description

The invention relates to a method for controlling an image sensor, in particular for controlling interlaced-type readout.

Interlaced-type readout is often used for producing images that are broadcast to television receivers. Television receivers are adapted to reproduce signals carrying interlaced-type images in a suitable manner, wherein two consecutive half images form one full image on a screen.

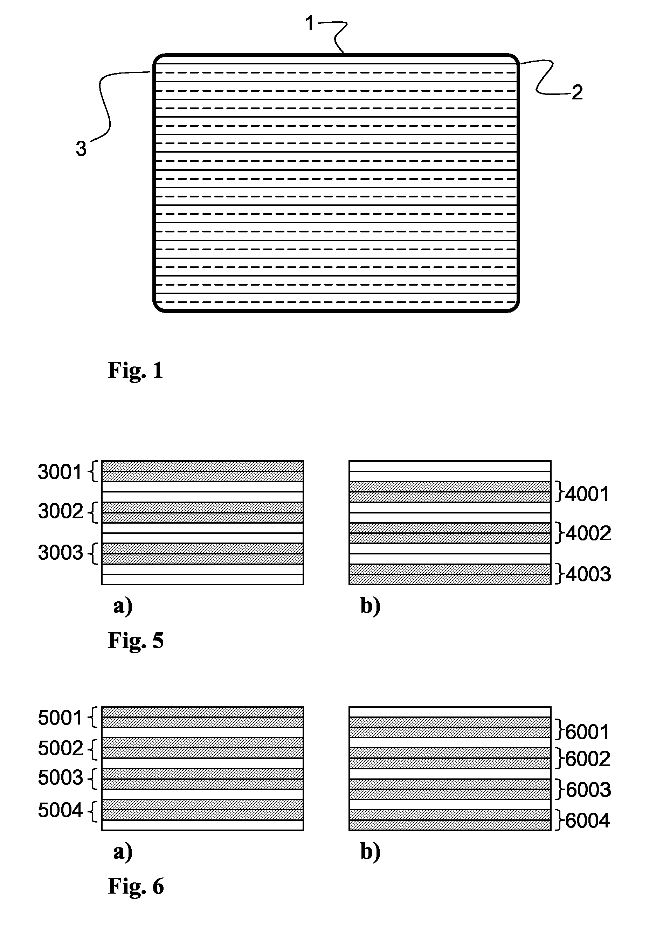

Figure 1 shows a diagrammatic view of a screen (1) with exemplary odd (2) and even (3) lines for interlaced display. The odd lines (2) are shown in solid lines, the even lines (3) are shown in dashed lines. The number of lines (2,3) may vary for different types of display. However, the principle of operation of an interlaced display remains the same. Interlaced displays typically reproduce an image by reproducing individual lines that are physically not consecutive on the screen. Typically, in a first so-called field every other line is reproduced, starting with the first line, which has an odd line number. This particular field is often called the odd field. When reproduction of the first field, or the odd field, is finished a second field is reproduced. In the second field every other line is reproduced, starting with the second line, which has an even line number. This particular field is often called the even field. A cycle of reproducing the odd and the even field results in reproducing the full image. Typically, the lines of the odd and the even field, respectively, are reproduced sequentially one after the other.

In the following the term row is used for referring to pixels that are arranged horizontally side-by-side and which form one row of the image sensor, in order to better distinguish between signal lines in the circuit and the geometrical arrangement of the pixels. Further, the term pixel is used for individual light-sensitive elements in the image sensor as well as for a corresponding individual element of the display.

Modern image sensors, for example CCD or CMOS sensors have a fixed number of pixels arranged in rows and columns, which number of pixels preferably corresponds to the number of pixels that are to be displayed on the screen of a TV receiver or other display device. Very often the number of pixels of a commercially available CCD or CMOS sensors exceeds the number of pixels that is actually required for display on the screen. In this case, one possible solution for producing a video signal that is adapted for display on a TV screen is to skip rows and/or columns during readout of the sensor. Another solution is to crop the image after acquisition to fit the number of pixels in rows and columns to the required format.

In order to better understand the invention the physical addressing of pixels in an image sensor of the CCD or CMOS type shall be briefly recalled in the following: The individual pixels in the above-mentioned type of sensors are arranged side-by-side in rows and one over the other in columns. Typically, pixels of different rows that are located in the same column can be selectively connected to one respective single data line, which data line is also referred to as column line. The pixels of one row are usually simultaneously connected to a number of column lines, wherein the number of column lines usually corresponds to the number of pixels in one row. Each column line can be read out individually and the data read is stored or further processed in further circuitry, which is known to the person skilled in the art and shall not be discussed here. Known methods of addressing the image sensor for readout provide for sequentially applying the signal of the pixels of one single row to the column lines. If the pixels of multiple rows are to be combined in a subsequent processing step in order to match the physical resolution of the image sensor and the display device, the rows are read out sequentially and the read image data is stored. The combination steps are performed later on using the data stored. Reading out the desired number of rows and processing must be performed within the same time frame that is available or required for displaying the row on the display device. Depending on the number of rows that are to be combined this dramatically reduces the time available for reading out individual rows sequentially. This in turn dramatically reduces the time available for exposing the image sensor to incident light, thus reducing the dynamic range of the image sensor.

It is, therefore, desirable to provide a method which makes maximum use of the pixels available on the image sensor or while producing an output that is suitable for display on a TV receiver or other display device without the need for excessive image processing subsequent to the actual image acquisition. It is further desirable to provide a method for addressing an image sensor in a manner such that the timings of image readout and image reproduction correspond, independently of a number of rows that are to be combined for reproduction. It is yet further desirable to provide a method for reading out an image sensor that provides improved signal-to-noise figures without physically changing the image sensor. Finally it is desirable to provide optical pre-filtering in order to reduce aliasing.

The inventive method suggests a modification of the vertical scanning of the image sensor in order to achieve the above-mentioned objects. The modified scheme for addressing the image sensor for readout includes simultaneously reading a number of pixels which, during readout, are simultaneously physically connected to the same data line. In one embodiment of the invention, the data of the individual pixels that are connected to the same data line simultaneously is averaged in storage elements that are assigned to the respective data lines. In another embodiment of the invention, the storage elements hold the largest value of all those pixels that are simultaneously connected to the respective data line. In yet another embodiment of the invention, the data of the individual pixels that are simultaneously connected to the respective data line is summed in the storage elements. To this end, a modified pattern is suggested for use in one embodiment that uses shift registers for addressing.

It is to be noted that the rows of pixels of which are simultaneously connected to the column lines need not be adjacent.

Depending on the type of pixel of the image sensor and the circuitry that is used for reading the signal present at the column line, the output signals of the pixels simultaneously connected to the column line are averaged. For example, if the signal at the column line is applied to a capacitor, the capacitor provides for a certain amount of averaging.

In the drawing,
- Fig. 1: shows a diagrammatic view of a screen with odd and even lines for interlaced display;
- Fig. 2: shows a block diagram of an exemplary image sensor for use in accordance with the invention;
- Fig. 3: shows a detail of an exemplary image sensor for use in accordance with the invention;
- Fig. 4: shows a second exemplary mode of controlling an imaging device according to the invention;
- Fig. 5: shows a third exemplary mode of controlling an imaging device according to the invention; and
- Fig. 6: shows a first exemplary mode of controlling an imaging device according to the invention.

Same or similar elements are assigned the same reference symbols in the drawing.

Figure 1 has been discussed above and will not be addressed in detail again.

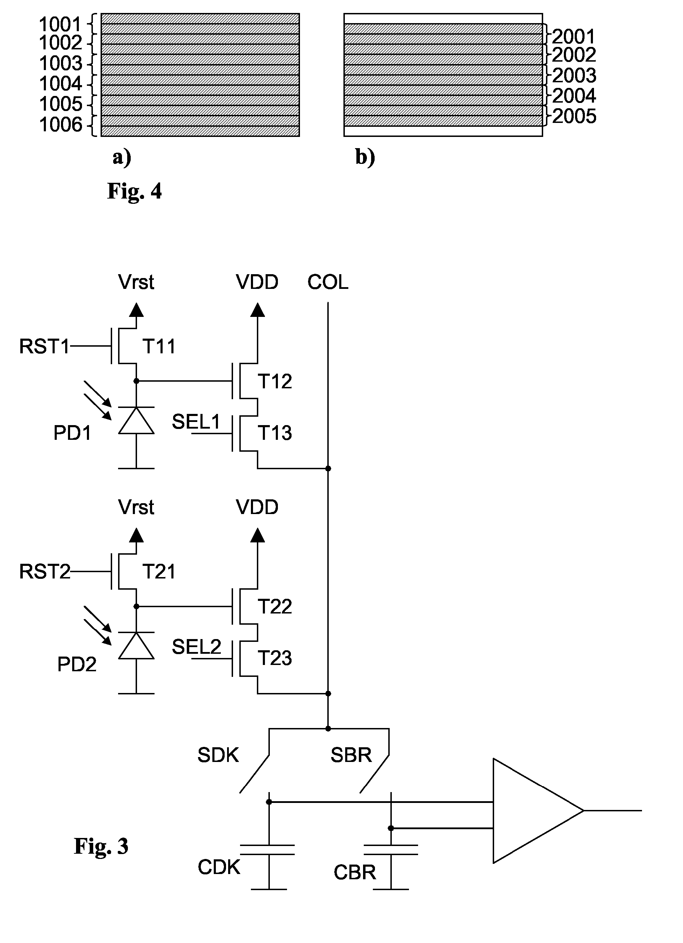

Figure 2 shows a schematic block diagram of an exemplary image sensor 100 which can be used in accordance with the invention, but the structure of which is known. The image sensor 100 comprises a multiplicity of light-sensitive elements or pixels 101 arranged in rows and columns. The pixels 101 can be addressed for reset into an initial state and for reading out via a multiplicity of reset and select lines RST and SEL, respectively. For clarity reasons, only one line is assigned a corresponding reference symbol, respectively. Pixels 101 that are arranged in the same column can selectively apply their respective image signal to one of a multiplicity of column lines COL. The multiplicity of column lines COL is connected to a readout circuitry 102. The multiplicity of reset lines RST is connected to a first shift register 103, through which first tokens are passed by accordingly applying clock signals (not shown). The multiplicity of select lines SEL is connected to a second shift register 104, through which second tokens are passed by accordingly applying clock signals (not shown) in the same manner as for the first shift register. Arrows inside the shift registers this indicate an exemplary direction in which the tokens are passed through the registers. It is obvious, that depending on the way the image sensor and the shift registers are addressed for readout the direction may be reversed.

Typically, the shift registers used for addressing image sensors have a number of cells or a word width that equals the number of rows of the image sensor. In this way a maximum flexibility for controlling the operation is provided.

For reading out every single row of the full image in a non-interlaced way, also referred to as progressive readout, the first shift register 103 is filled with a first pattern similar to **"0, 1, 0, ..., 0"** (not shown) such that when the pattern is shifted, for example during a horizontal retrace interval, the next row of pixels is addressed for setting into a predetermined initial state. The number of zeros in the pattern following the 1 depends on the number of rows of the image sensor. The respective row at the position of which the 1 is present is the active row, i.e. is reset. It should be noted that in case of an inverted logic the pattern would be the complement of the one shown above. The pattern is shifted step by step through the shift register until the whole image is read out. At the same time when the first pattern is loaded into the first shift register 103 a second pattern is loaded into the second shift register 104 for addressing rows of the image sensor for readout. The second pattern may be similar to **"1, 0, 0, ..., 0"** (not shown). The two exemplary patterns mentioned before are adapted to read out a row of the image sensor and immediately after that reset the row into a predetermined initial state. Both shift registers are clocked simultaneously and the pattern are shifted in a circular manner, i.e. those bits that are shifted out at one end of the shift registers are input at the other end of the shift registers.

In case an interlaced image scanning is desired, the patterns are shifted by two clock cycles and only every other row is read out. During the vertical retrace between the odd and the even field the patterns are shifted by one position in order to be able to address those rows that have been skipped when reading out the other field.

In a development of the method for reading out an image sensor the rows are read out twice, a first time essentially immediately after resetting the pixels and a second time before resetting the pixels again. Both values are stored and subtracted from each other and in that way differences in the initial states are compensated for. The resulting values are substantially only depending on the amount of light incident on the sensor during exposition to light. In this case the pattern used may differ, but the basic principle of shifting a pattern through one or more shift registers remains the same.

The inventive method suggests using a particular pattern for addressing multiple rows simultaneously. The pixels of those rows that are addressed simultaneously are connected to the respective column lines simultaneously.

One exemplary embodiment of the inventive method suggests simultaneously addressing two consecutive rows while making use of all rows available in the imaging device for both, the odd and the even field. The addressing scheme for this exemplary embodiment of the inventive method is shown in figure 4. Figures 4 a) and b) show twelve consecutive rows which are representing the rows of an exemplary image sensor. Figure 4 a) represents the combination of rows of the image sensor for obtaining the odd field. Figure 4 b) represents the combination of rows of the image sensor for obtaining the even field. A suitable pattern for the vertical trace interval of the odd field would be as follows: **"1, 1, 0, ..., 0"**. Using the aforementioned pattern the first two rows of an image sensor are addressed for reset or readout, and those pixels of the two rows that are arranged in the same column are connected to the respective same column lines simultaneously for readout. In this way signals representing pixels of an imaginary interlaced row 1001 are obtained and are available at the respective column lines. The imaginary row 1001 is indicated by the curved brackets. In order to obtain the pixel signals for the next imaginary interlaced row 1002 the pattern is shifted through the shift register by two positions. As the pattern is shifted in the shift register the next state is **"0, 0, 1, 1, 0, ..., 0"**, i.e. the third and fourth row are addressed for reset and readout, respectively. The pattern is shifted by two positions until all rows have been addressed, and the odd field has been read out completely. Shifting for reading out the next rows takes place in a horizontal retrace period, such that an essentially constant stream of pixel data is produced, which is suited for, e.g. broadcast transmission. In figure 4, the other combined rows of the odd field are assigned the references 1003 to 1006. Referring back to figure 2, the aforementioned pattern for reading the odd field is shown exemplarily in the shift registers 103 and 104, shifted with respect to each other in order to allow for resetting the rows after readout. During the vertical retrace interval when switching from the odd to the even field the shift registers are loaded with essentially the same patterns as for the odd field, but shifted by one position. This pattern is referred to as a second pattern in the following, for reasons of clarity. The resulting second pattern is as follows: **"0, 1, 1, 0, ..., 0"**. By shifting of the second pattern by two positions the even field can be read out while still making use of substantially all rows of the image sensor. The combination of physical rows of the sensor to obtain imaginary rows for interlaced readout of the even field is shown in figure 4 b). The imaginary rows are referenced 2001 to 2005, the physical rows combined in each case are enclosed in the curved brackets. It is to be noted that, depending on the actual number of rows in the image sensor, one or two physical rows may not be used either during readout of the odd or of the even field. In view of the usually large number of rows and in view of the fact that the physical rows of the image sensor are in any case used for one of the fields, this is not limiting the usefulness of the inventive method. It is further to be noted that the total number of row signals generated for one odd and one even field does not exceed the total number of rows of the image sensor. This is due to combining the signals of two or more rows and shifting the readout of the combined rows between the odd and the even field by one or more rows, depending on the number of physical rows combined in each case. Combination of pairs of rows is indicated by the curved brackets in figure 4, enclosing in each case to consecutive rows. It is, however, possible to combine other numbers of physical rows, depending on the number of desired output rows and the number of physical rows present in the sensor. The number of rows that are combined also affects the number of shift operations prior to reading out the next set of rows. In order to clearly distinguish those physical rows of the image sensor, which are used for generating an image signal from those, which are not used for generating an image signal, the used rows are indicated by a hashed pattern.

It is to be noted that the pattern for resetting into the predetermined state and for readout are similar, except for a shift by an appropriate number of rows depending on the number of rows that are addressed simultaneously. I.e. those rows that are reset simultaneously preferably are also read out simultaneously.

The application of the inventive method is not limited to the so-called 3T-pixel cell, which was discussed above; it can rather be used for all image sensors which allow for simultaneously applying the signals of individual pixels cells of different rows to one shared column line.

In the interlaced scanning according to this embodiment of the invention the full image sensor area is scanned twice as both, the odd and the and even fields use substantially all physical rows of the sensor.

Since in the inventive method described above two or more rows are addressed simultaneously, and their signals are applied to respective column lines, storage elements connected to the column lines perform an averaging of the signals that are applied simultaneously. The noise of those pixels that are connected to the same column lines is averaged, too. The noise is coming from different noise sources, e.g. the pixels of two consecutive rows. As the noise in the pixels of the two consecutive rows is not correlated, but the image signal captured by the two pixels that are connected to the same column line is substantially correlated the signal-to-noise ratio is improved by 3dB. At the same simultaneously connecting a number of consecutive rows to respective column lines and averaging the output signal solves the problem of aliasing that is often present in interlaced image reproduction, since the averaging of consecutive pixels results in a cosine shaped optical filter characteristic.

Simultaneously addressing a number of consecutive rows also advantageously solves the problem of how to match readout of the image sensor with a desired field and frame rate. Readout of the rows still fits into the horizontal retrace interval, and at no additional time is needed for sequentially reading out consecutive rows and subsequent processing to produce one combined line for display.

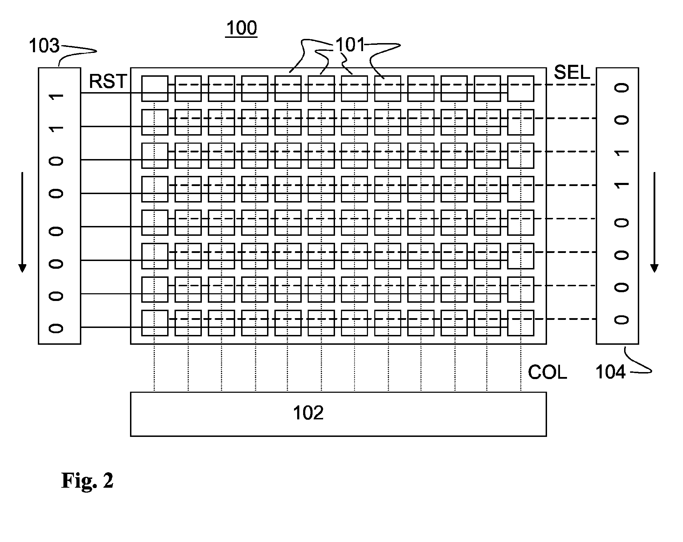

Another embodiment of the invention suggests a method for generating interlaced images, wherein the output images have a smaller number of lines than the total number of physical rows of the image sensor divided by two. In this embodiment, for producing the odd field, a number of rows is selected and read simultaneously and after reading the pattern used for addressing is shifted by an appropriate number of bit positions, e.g. twice the number of rows that are read out simultaneously. In this embodiment, a number of rows of the image sensor are unused in the odd and the even field, respectively. The physical rows of the image sensor that are used for the odd and the even field are shown in figure 5 a) and b), respectively. As in figure 4 the rows that are filled with a hashed pattern are those that are actually used. Those rows that do not have a pattern are not used. In figure 5 a) two rows are combined for simultaneously reading out, respectively. Those rows that are combined during reading of the odd field are indicated by the curved brackets and are referenced 3001, 3002 and 3003. In figure 5 b), those rows that are combined during reading the even field are indicated by the curved brackets and are referenced 4001, 4002 and 4003. Although this embodiment of the inventive method may suffer from a certain amount of aliasing, it still provides a simple approach to produce an output image which has a smaller number of lines than the actual number of rows in the image sensor. As a number of rows are combined, the signal to noise ratio is improved.

The ratio between the number of rows of the image sensor and the number of lines that are to be output as an interlaced image signal may be selected arbitrarily. Figure 6 a) and b) show and exemplary embodiment of a ratio that is chosen differently from that of figure 5. In this embodiment again to consecutive rows are read out simultaneously, but only one row is skipped during readout of the odd and the even field, respectively. This embodiment of the invention is a mixture between the one described with reference to figure 4 and the one described with reference to figure 5. Aliasing is reduced with respect to the amount of aliasing that may occur in the method described with reference to figure 5, since some of the rows of the image sensor are used for acquiring both, the odd and the even field. As shown in figure 5, those rows that are used for acquiring the image of the odd or the even field are shown with a hashed pattern in figure 6. Those rows that are not used do not have a pattern. Those rows that are combined during reading of the odd field are indicated by the curved brackets and are referenced 5001, 5002, 5003 and 5004 in figure 6 a). In figure 6 b), those rows that are combined during reading the even field are indicated by the curved brackets and are referenced 6001, 6002, 6003 and 6004.

Simultaneously addressing of pixels of two consecutive rows and applying their signals to one shared column line will be described in more detail with reference to figure 3. Figure 3 shows pixels of an image sensor that are arranged in two consecutive rows and in the same column. Each of the pixels has a photodiode PD1, PD2 and a reset transistor T11, T21 connected to the cathode of the photodiode. The cathodes of the photodiodes are further connected to a respective transistor T12, T22, which act as amplifiers or buffers. Each pixel further has a transistor T13, T23 acting as a switch and connecting the respective photodiode to the shared column line. An appropriate pattern is assumed to be shifted to shift registers (not shown) in order to drive the reset and select signals RST1, RST2, SEL1, SEL2, respectively. During addressing according to the inventive method the pixels of the two consecutive rows are addressed for simultaneous reading by accordingly switching the transistors T13 and T23 via the select signals SEL1 and SEL2. At the same time the switch SBR is closed, allowing for the signal present at the column line to be stored as the so-called bright value in a first storage element CBR, which in this case is a capacitor. In the next step, the switches that were closed for reading out are opened and the transistor switches T11 and T21 for resetting the photodiodes are closed by accordingly applying reset signals RST1 and RST2. At the same time the switch SDK is closed, allowing for the signal present at the column line to be stored as the so-called dark value in its second storage element CDK. It is now possible to easily determine the difference between the two stored signals, thereby compensating for individual variations in the dark values of the pixels. As the addressing moves on to the next rows, the reset switches are opened and the pixels are exposed to incident light, thereby capturing data for the next image to be read out.

It is to be noted that, although throughout the foregoing specification the exemplary embodiments have been described combining two consecutive rows. However, the number of rows addressed simultaneously is not limited to two, nor is it mandatory to perform the readout in interlaced fashion. The inventive method for addressing and simultaneous readout can even be used in a moving average fashion to enhance signal to noise ratio and reduce aliasing, while still having a high number of samples available for the full image.

## Claims

1. Method for controlling an image sensor arrangement to produce an image output, wherein the image sensor arrangement includes:
- light sensitive elements (PD1, PD2) at an electrode of which signals are present depending on the respective incident light and that are arranged in a matrix-like arrangement in rows and columns;
- reset elements (T11, T21) for setting the individual light sensitive elements (PD1, PD2) into predetermined states;
- switches (T13, T23) for applying the signals of the individual light sensitive elements (PD1, PD2) to one of a multiplicity of signal lines (COL), wherein the signal lines (COL) are arranged to allow for a multiplicity of signals of a corresponding multiplicity of light sensitive elements (PD1, PD2) to be applied to shared signal lines (COL) simultaneously;
wherein the method includes the steps of:
a) setting light sensitive elements (PD1, PD2) that are arranged in a first group of rows (1001) into predetermined states;
b) simultaneously applying the signals of those light sensitive elements (PD1, PD2) of the first group of rows (1001), which are arranged in the respective same column, to a shared signal line (COL), wherein a first signal, representing an initial value, for those elements simultaneously connected to the respective shared signal line (COL) can be obtained by correspondingly reading out the signal present at the respective shared signal line (COL);
c) exposing the light sensitive elements (PD1, PD2) to incident light for a period of time;
d) simultaneously applying the signals of those light sensitive elements (PD1, PD2) of the first group of rows (1001), which have been set into predetermined states in step a) and which have been exposed to incident light in step c), to the shared signal line (COL), wherein a second signal representing the amount of light that hit the light sensitive elements (PD1, PD2) during the exposure to incident light in step c) can be obtained by correspondingly reading out the signal present at the respective shared signal line (COL).

2. The method of claim 1, **characterised in that** after setting the light sensitive elements (PD1, PD2) of the first group of rows (1001) into the predetermined state in step a) and before reading out the signal representing the amount of light that hit the light sensitive elements (PD1, PD2) during the exposure to incident light in step d), the sequence of method steps a) to d) of claim 1 is started for a second group of rows (1002), wherein the sequences for the first and the second group of rows (1001, 1002) run in a time-staggered manner.

3. The method of claim 2, **wherein** the first and the second group of rows (1001, 1002) form respective first and second groups of consecutive rows.

4. The method of claim 3, **wherein** the number of rows in the first or second group of consecutive rows (3001, 3002) is even, and that the first group of consecutive rows (3001) and the second group of consecutive rows (3002), which are set into a predetermined state and read out one after the other have a distance from each other that is equal to the number of rows comprised in the first or second group of consecutive rows.

5. The method of claim 3, **wherein** the first group of consecutive rows (5001) and a second group of consecutive rows (5002), which are set into a predetermined state and read out one after the other have a distance from each other that is smaller than the number of rows comprised in the first or second group of consecutive rows (5001, 5002), or have no distance between them.

6. The method of claim 4 or 5, **wherein** the image sensor arrangement (100) is read out in an interlaced manner in a first and a second cycle in order to produce a full image, wherein those rows (4001) that are located in between the first and the second groups of consecutive rows (3001, 3002) are read out in the second cycle, and wherein, in case the distance between the first and the second group of consecutive rows in terms of rows is smaller than the number of rows in the first and the second group of consecutive rows, or in case there is no distance between the first and the second group of consecutive rows, the groups of rows selected during the second cycle include rows that are comprised in the respective groups of rows during the first cycle.

7. The method of any of the preceding claims, **characterised in that** the signals of those light sensitive elements (PD1, PD2), which are simultaneously connected to the shared signal line (COL) are averaged in a storage element (CDK, CBR).

8. The method of any of the preceding claims, further including the step of determining the difference between the initial values determined in step b) and the values determined in step d), wherein the difference corresponds to the amount of light incident during exposure in step c).
